Europäisches Patentamt

European Patent Office

Office européen des brevets

(11) Veröffentlichungsnummer: **0 143 321**
**B1**

(12) **EUROPÄISCHE PATENTSCHRIFT**

(45) Veröffentlichungstag der Patentschrift:
25.01.89

(51) Int. Cl.⁴: **C 08 L 51/00**

(21) Anmeldenummer: **84112691.5**

(22) Anmeldetag: **20.10.84**

(54) Formmassen mit verbesserten Verarbeitungseigenschaften und daraus hergestellte alterungsbeständige Kunststoffolien.

(30) Priorität: 24.11.83 DE 3342435

(43) Veröffentlichungstag der Anmeldung:
05.06.85 Patentblatt 85/23

(45) Bekanntmachung des Hinweises auf die Patenterteilung:
25.01.89 Patentblatt 89/4

(84) Benannte Vertragsstaaten:
AT BE CH DE FR GB IT LI LU NL SE

(56) Entgegenhaltungen:
Die Akte enthält technische Angaben, die nach dem Eingang der Anmeldung eingereicht wurden und die nicht in dieser Patentschrift enthalten sind.

(73) Patentinhaber: **ALKOR GMBH KUNSTSTOFFE, Morgensternstrasse 9 Postfach 71 01 09, D-8000 München 71 (DE)**

(72) Erfinder: **Fink, Roland, Dipl.- Ing., Anwänden 3, D-8026 Ebenhausen (DE)**
Erfinder: **Mayr, Maximilian, Frank- Caro- Strasse 63, D-8268 Garching (DE)**

(74) Vertreter: **Seiler, Siegfried, Langhansstrasse 6, D-5650 Solingen 11 (DE)**

**Beschreibung**

Die vorliegende Erfindung betrifft Formmassen mit verbesserten Verarbeitungseigenschaften und daraus hergestellte alterungsbeständige Kunststoffolien, insbesondere flexible Tiefziehfolien mit verbessertem Alterungsverhalten, bestehend aus einer Mischung auf der Basis von mit Acrylat gepropftem Polyvinylchlorid mit einem Anteil des Acrylats an dem Pfropfpolymerisat oder Pfropfmischpolymerisat von 30 bis 60 Gew.-%, vorzugsweise 35 bis 50 Gew.-% (bezogen auf 100 Gew.-% acrylatgepropftes PVC oder acrylatgepropftes Vinylchloridmischpolymerisat), und einem anderen Polymeren oder Polymergemisch sowie ggf. mit einem zusätzlichen Gehalt an Füllstoffen, Verarbeitungshilfsmitteln oder anderen an sich bekannten Zusatzmitteln.

Gemäß der Erfindung bestehen die Formmassen und die daraus hergestellten Kunststoffolien aus bestimmten Gewichtsmengen des mit Acrylat gepropften Polyvinylchlorids sowie bestimmten Gewichtsmengen eines anderen Polymeren oder Polymergemisches, das eine Glasumwandlungstemperatur von größer als 70° C, vorzugsweise größer als 80° C, besitzt und mit dem Polyvinylchlorid-Pfropfpolymerisat auf der Basis von Vinylchlorid verträglich ist.

Es sind bereits die unterschiedlichsten Folien und Verbundfolien, z. B. auf der Basis von Acrylnitril-Butadien-Styrol-Copolymerisaten mit weichmacherhaltigem Polyvinylchlorid, laminiert mit Hart- und Weich-PVC, bekannt. Diese Folien haben offensichtlich aufgrund ihres Weichmachergehaltes den Nachteil, daß allmählich eine Verringerung der Elastizität, der Kälteflexibilität und bei längerer Wärme- und Lichteinwirkung sogar Rissbildung der Oberfläche eintritt.

Laminate mit starren bzw. harten Polymerisaten, beispielsweise Hartpolyvinylchlorid, besitzen den Nachteil der hohen Steifigkeit und einer geringen Kälteflexibilität.

Die Beständigkeit gegen Wärme und Lichtalterung ist jedoch bei Folien, insbesondere Tiefziehfolien, für Automobilverkleidungsteile eine entscheidende Gebrauchseigenschaft, so daß die flexiblen und gleichzeitig gut thermoformbaren Verkleidungsfolien, insbesondere für Armaturenbretter, auf der Basis von Acrylnitril-Butadien-Styrol, Polyvinylchlorid und weichmachenden Komponenten, infolge der Oxidationsempfindlichkeit der in dieser Mischung vorhandenen Dien-Struktur in Anwesenheit von Licht- und/oder Wärmeenergie verhältnismäßig oxidationsempfindlich sind und auch diesen Anforderungen nicht in vollem Umfang entsprechen.

Aus C.A. Band 97, Nr. 24, Dez. 1982 ist weiterhin eine Kunststoffmischung bekannt, die poröse PVC-Teilchen enthält, die mit einem Acrylatelastomeren (40 - 80 Gew.-Teile), MBS (5 - 35 Gew.-Teile) und einem aromatischen Vinylpolymeren mit einer Cyanovinylverbindung und/oder Alkylmethacrylat (5 - 50 Gew.-Teile) imprägniert sind. z. B. werden 100 Teile der PVC-Suspension mit 6 Gew.-Teilen Butylacrylat bis(4-tert-butylcyclohexyl) peroxydicarbonate (0,18 Gew.-Teile und $HSCH_2CH_2OH$ 0,04 part für 30 min) verrührt und auf 75° C erhitzt, sowie verrührt mit 2 Teilen Methylmethacrylat und 0,03 Teilen bis(4-tert-butylcyclohexyl) peroxydicarbonate. Das so erhaltene modifizierte PVC weist zwar eine etwas erhöhte Schlagfestigkeit und Wärmebeständigkeit auf, ist wegen des Anteils an MBS (Methacrylat-Styrol-Copolymerisat gepropft mit Butadien) jedoch für alterungsstabile, flexible Tiefziehfolien nicht geeignet. Trotz der in dieser Rezeptur etwas verbesserten Schlagzähigkeit sind auch diese Werte für bestimmte Anwendungsgebiete nicht ausreichend.

Ziel und Aufgabe der vorliegenden Erfindung war es daher, Folien und Formmassen zur Herstellung von Folien mit einwandfreier Oberfläche auf der Basis oder unter Mitverwendung von Polyvinylchlorid zu erhalten, die verbesserte Verformungs- und Relaxationseigenschaften aufweisen. Die Folien sollten dabei vorzugsweise als Tiefziehfolien mit verbessertem Alterungsverhalten gut geeignet und sowohl als Mono- als auch Verbundfolie verwendbar sein und eine gute Schlagzähigkeit aufweisen.

Erfindungsgemäß wurde festgestellt, daß diesen Zielen und Aufgaben Formmassen und aus den Formmassen hergestellte Kunststoffolien entsprechen, bestehend aus Gemischen auf der Basis von mit Acrylat gepropftem Polyvinylchlorid, einem Anteil des Acrylats an dem Pfropfpolymerisat von 30 bis 60 Gew.-%, vorzugsweise 35 bis 50 Gew.-%, (bezogen auf 100 Gew.-% acrylatgepropftes PVC oder acrylatgepropftes Vinylchloridmischpolymerisat) und einem anderen Polymeren oder Polymergemisch sowie ggf. mit einem zusätzlichen Gehalt an Füllstoffen, Verarbeitungshilfsmitteln oder anderen an sich bekannten Zusatzmitteln.

Gemäß der Erfindung besteht die Formmasse und die daraus hergestellte Kunststoffolie aus 90 bis 45 Gew.-%, vorzugsweise 85 bis 50 Gew.-%, des mit Acrylat gepropften Vinylchloridpolymerisates 1. und 10 bis 55 Gew.-%, vorzugsweise 15 bis 50 Gew.-%, des anderen Polymeren oder Polymergemisches 2. das eine Glasumwandlungstemperatur von größer als 70° C, vorzugsweise größer als 80° C, besitzt und mit dem Polyvinylchlorid-Pfropfpolymerisat verträglich ist und ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate ist und dass das Polymergemisch 2. zusätzlich mindestens ein Copolymerisat mit polaren Gruppen oder Monomeren mit einer Glasumwandlungstemperatur von kleiner als 60 °C, vorzugsweise kleiner als 50°C, enthält.

Es sind bereits zahlreiche Verfahren zur Herstellung von acrylathaltigen Vinylchloridmisch- und -pfropfpolymerisaten bekannt (vgl. u. a. DE-AS-1 122 706).

Es ist weiterhin bekannt, daß die Polyvinylchlorid Acrylatmischpolymerisate und die daraus hergestellten Formteile, Formkörper und dgl. andere Eigenschaften aufweisen, insbesondere eine niedrigere Glasumwandlungstemperatur aufweisen als das mit Acrylat gepropfte Vinylchloridhomo- oder -mischpolymerisat und die daraus hergestellten Formteile, Formkörper und dgl..

Im Rahmen der vorliegenden Erfindung wurden zahlreiche Versuche unter Verwendung mit Acrylester gepfropftem Polyvinylchlorid durchgeführt. Es wurde dabei festgestellt, daß die Extrusion und Kalandrierung von Formmassen, die aus acrylestergepfropftem Polyvinylchlorid mit einem Acrylesteranteil von 30 bis 60 % bestehen, meistens Platten, Profile und Folien mit rauher Oberfläche ergeben. Diese Mischungen zeigen auch bei der Tiefziehverformung ein ausgeprägtes elastisches Verhalten; dies bewirkt ein schmales Intervall der Verformungstemperatur, einen geringen Verformungsgrad und eine verhältnismäßig große Dimensionsänderung des Formteiles bei Wärmebelastung, so daß acrylestergepfropftes Vinylchlorid mit diesem Acrylesteranteil nur schlecht für die Formteilherstellung aus Folien oder Platten geeignet ist.

Im Rahmen der Erfindung werden diese Nachteile unter Verwendung der erfindungsgemäßen Formmasse vermieden.

Im Rahmen der vorliegenden Erfindung enthält (wie bereits aufgeführt) die Formmasse bzw. die daraus hergestellte Folie als anderes Polymere oder als Polymergemisch, das eine Glasumwandlungstemperatur von größer als 70°C, vorzugsweise größer als 80 °C, besitzt, ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder einer Mischung von zwei oder mehreren dieser Polymerisate oder Copolymerisate. Diese Produkte erhöhen die Verarbeitungstemperaturen und damit die thermische Beanspruchung der Polyvinylchlorid-Matrix. Außerdem weisen die aus den Mischungen hergestellten Folien mit zunehmendem Gewichtsanteil einen gewissen Versteifungseffekt auf. Um besonders flexible Folien zu erzielen, enthält die Formmasse bzw. die daraus hergestellte Folie nach einer bevorzugten Ausführungsform als anderes Polymergemisch 2. zusätzlich (d. h. als Bestandteil des Polymergemisches) mindestens ein Copolymerisat mit polaren Gruppen oder Monomeren mit einer Glasumwandlungstemperatur von kleiner als 60°C, vorzugsweise kleiner als 50°C, mit der Maßgabe, daß die Glasumwandlungstemperatur des Polymergemisches (aus 2.3 und 2.4) größer als 70°C, vorzugsweise größer als 80°C, bleibt. Als Copolymerisate mit polaren Gruppen oder Monomeren werden nach einer vorteilhaften Ausführungsform Olefin-Copolymerisate mit polaren Gruppen oder Monomeren mit einer Glasumwandlungstemperatur unterhalb 60°C, vorzugsweise unter 50°C, zur weitergehenden Modifizierung der Verarbeitungs- und Verformungeigenschaften sowie zur Einstellung der geforderten mechanischen Eigenschaften eingesetzt. Bevorzugt werden Ethylencopolymerisate mit polaren Gruppen oder Monomeren verwendet. Nach einer vorzugsweisen Ausführungsform besteht somit das Polymergemisch, das eine Glasumwandlungstemperatur von größer als 70°C, vorzugsweise größer als 80°C, besitzt, aus mindestens einem Styrol-Acrylnitril-Copolymerisat (SAN), einem α Methylstyrol-Acrylnitril-Copolymerisat, einem Styrol-Maleinsäureanhydrid-Copolymerisat, einem Polymethylmethacrylat (PMMA) und/oder einem Copolymerisat aus einem oder mehreren Acrylestern mit Acrylnitril oder einer Mischung von zwei oder mehreren dieser Copolymerisate und mindestens einem Olefin-Copolymerisat mit polaren Gruppen und Monomeren, vorzugsweise einem Ethylen-Copolymerisat mit polaren Gruppen oder Monomeren.

Es hat sich gezeigt, daß solche Ethylen-Copolymere, die mit Polyvinylchlorid ein Einphasensystem bilden, besonders geeignet sind. Da diese Ethylen-Copolymere mit den vorgenannten Polymeren mit einer Glasumwandlungstemperatur von größer als 70°C praktisch nicht verträglich sind, war es deshalb überraschend, daß durch den Zusatz der PVC-verträglichen polaren Polyolefine die Verträglichkeit mit den wärmebeständigkeitsverbessernden Polymeren nicht verändert wird. Dies erkennt man, z. B. bei der Messung des Torsionsmoduls nach DIN 53445 daran, daß kein zusätzliches Dispersionsmaximum auftritt und die Temperatur der Hauptdispersion (Glasumwandlungstemperatur) erhalten bleibt. Den vorteilhaften Effekt dieser Zusätze von PVC-verträglichen Polyolefinen auf den Abbau von Verformungsspannungen erkennt man an einer stärkeren Abnahme des Schubmoduls mit steigender Temperatur schon im energieelastischen Bereich, die auf Relaxationsvorgänge (viskose Fließvorgänge) schließen läßt.

Das Polymergemisch 2. besteht aus 3 bis 30 Gew.-Teilen, vorzugsweise 5 bis 25 Gew.-Teilen, (bezogen auf die Kunststoffmischung) eines oder mehrerer Olefincopolymerisate mit polaren Gruppen, mit einer Glasumwandlungstemperatur kleiner als 60°C, vorzugsweise kleiner als 50°C, vorzugsweise aus einem oder mehreren Ethylen-Copolymerisaten mit polaren Gruppen und 3 bis 52 Gew.-Teilen, vorzugsweise 5 bis 45 Gew.-Teilen, (bezogen auf die Kunststoffmischung), eines Styrol-Acrylnitril-Copolymerisates (SAN), eines α Methylstyrol-Acrylnitril-Copolymerisats, eines Styrol-Maleinsäureanhydrid-Copolymerisats, eines Polymethylmethacrylates (PMMA) und/oder eines Copolymerisats aus einem oder mehreren Acrylestern mit Acrylnitril oder einer Mischung von zwei oder mehreren dieser Copolymerisate.

Unter den Begriff Olefin-Copolymerisat mit polaren Monomeren fallen im Rahmen der vorliegenden Erfindung zusätzlich auch Olefin-Terpolymerisate mit polaren Monomeren.

Bevorzugt geeignet sind polare Gruppen enthaltende Polymerisate aus Ethylen und Kohlenmonoxid (CO-Gehalt $\geqslant$ 9 Gew.-%, bezogen auf 100 Gew.-% Polymerisat). Zu diesen gehören u. a. Copolymere aus Ethylen und Kohlenmonoxid mit einem Kohlenmonoxidgehalt von 9 bis 25 Gew.-%, vorzugsweise 10 bis 20 Gew.-% (bezogen auf 100 Gew.-% Polymerisat).

Bevorzugt werden Terpolymerisate aus Ethylen, Kohlenmonoxid und Vinylacetat mit einem Anteil von 9 bis 20 Gew.-%, vorzugsweise 10 bis 15 Gew.-% Kohlenmonoxid, 19 bis 35 Gew.-%, vorzugsweise 20 bis 30 Gew.-% Vinylacetat und 72 bis 45 Gew.-%, vorzugsweise 70 bis 55 Gew.-% Ethylen und/oder Copolymerisate aus Ethylen-Vinylacetat mit einem Anteil von 50 bis 70 Gew.-% Vinylacetat, bezogen auf das Olefin-Copolymer, eingesetzt.

Grundsätzlich geeignet sind auch Copolymerisate des Ethylens mit Acrylestern, wenn der Ethylenanteil kleiner als 50 Gew.-% beträgt, ebenso Terpolymere aus Vinylacetat und höheren Acrylestern, vorzugsweise Butylacrylate.

Welche Zusatzmengen innerhalb der angegebenen Gewichtsbereiche davon eingesetzt werden, hängt neben der Beeinflussung der Verarbeitungs- und Verformungseigenschaften auch noch von der für das Einsatzgebiet angestrebten Flexibilität bzw. Härte ab. Nach einer bevorzugten Ausführungsform enthält die Formmasse oder die daraus hergestellte Folie als Polymergemisch, das eine Glasumwandlungstemperatur von größer als 70° C, vorzugsweise größer als 80° C, besitzt, mindestens ein Styrol-Acrylnitril-Copolymerisat (SAN), ein Methylstyrol-Acrylnitril-Copolymerisat, ein Styrol-Maleinsäureanhydrid Copolymerisat, ein Polymethylmethacrylat (PMMA) und/oder ein Copolymerisat aus einem oder mehreren Acrylestern mit Acrylnitril oder eine Mischung von zwei oder mehreren dieser Copolymerisate und mindestens ein Olefin-Copolymerisat mit polaren Gruppen oder Monomeren, vorzugsweise ein Ethylen-Copolymerisat mit polaren Gruppen oder Monomeren mit einer Glasumwandlungstemperatur unterhalb 60° C.

Aus den erfindungsgemäßen Folien werden bevorzugt Formkörper oder Formkörperteile für Kraftfahrzeuginnenräume, Armaturenbretter von Kraftfahrzeugen sowie Sicherheitsabdeckungen, Seitenwände, Vorder- und Rückwandteile sowie Seitenpfosten und deren Sicherheitsabdeckungen für Kraftfahrzeuge und Flugzeuge nach an sich bekannten Verfahren, vorzugsweise Tiefziehverfahren, hergestellt.

Die Folie wird vorzugsweise als Monofolie eingesetzt. Nach einer Ausführungsform besteht sie in Kombination mit einer anderen Folie und stellt eine Verbundfolie dar.

Die Herstellung erfolgt in diesem Fall so, daß zunächst die erfindungsgemäße Verbundfolie, die eine oder mehrere Folienbahnen enthält, nach an sich bekannten Verfahren, z. B. unter Verwendung von Breitschlitzdüsen, Kalandriervorrichtungen kaschiert oder im Coextrusionsverfahren hergestellt wird. Nachfolgend erfolgt das Tiefziehen oder Formpressen der Verbundfolie in geeigneten Formen.

Die aus der Folie oder Verbundfolie erhaltenen Formen, Formteile oder Formkörper, die vorzugsweise in Form von Armaturenbrettern, Seitenwänden, Rückwänden, Abdeckungen oder Teilen davon hergestellt werden, können unmittelbar oder in Verbindung mit Schaumfolien sowie in Form der hinterschäumten Formteile bzw. Formkörper benutzt werden. Im letzteren Fall werden die aus der Folie oder Verbundfolie hergestellten Formkörper und/oder -teile direkt ausgeschäumt oder zum Ausschäumen in eine Ausschäumform eingelegt. Zum Ausschäumen werden die an sich bekannten schäumbaren Kunststoffe, z. B. Polyurethanschaum und dgl. verwendet, denen je nach Art und Zusammensetzung der Kunststoffe Treibmittel, Mittel zum Schwerentflammbarmachen, Hilfs- und Zusatzstoffe vor dem Verschäumen zugesetzt werden.

Die Dicke des Schaumes richtet sich nach dem vorgesehenen Einsatzzweck und der äußeren Form des Formteiles. Sie kann zwischen 1 mm bis 10 cm, vorzugsweise zwischen 3 mm bis 5 cm, liegen.

Bezogen auf 100 Gew.-Teile Kunststoff werden 5 bis 30 Gew.-Teile Füllstoffe, 0,5 bis 5 Gew.-Teile Verarbeitungshilfsmittel wie Stabilisatoren, Gleitmittel usw. eingesetzt.

Die günstigen Auswirkungen des begrenzten viskosen Fließens oberhalb der Glasumwandlungstemperatur auf die Verminderung der Verformungsspannung (Rückschrumpfung) wird durch folgende Beispiele und Vergleichsversuche belegt.

**Beispiel 1** (mit Vergleichsversuch).

Ein Folienstreifen von 50 mm Länge, 20 mm Breite und 0,4 mm Dicke wird in einem Wärmeschrank mit einer Temperatur von 170° C zwischen zwei beweglichen Klemmvorrichtungen eingespannt. Nach einer Durchwärmzeit von 10 min wurde die Probe um 100 % gedehnt und innerhalb 30 auf 120° C abgekühlt, dem Schrank entnommen und innerhalb 3 min auf Raumtemperatur abgekühlt.

Die Nachschrumpfung wurde nach Wärmelagerung der gedehnten Probe während 15 min bei 120° C - der üblichen Testtemperatur - gemessen. Dabei ergaben sich folgende Werte:

| Rezeptur | | Vergleichsmischung | Gew.-Tl. (erfindungsgem. Mischung) | | | |
|---|---|---|---|---|---|---|
| | | | a | b | c | d |
| A-PVC | (1) | 70 | 65 | 60 | 55 | 50 |
| mod. SAN | (3) | 30 | 30 | 30 | 30 | 30 |
| polares Olefincopolym. | (2) | 0 | 5 | 10 | 15 | 20 |
| Schrumpfung 120° C (%) 15 min | | 23 | 20 | 14,5 | 13 | 12 |
| Härte Shore D | | 70 | 67 | 64 | 57 | 50 |

1) Pfropfpolymerisat aus 40 Gew.-% Acrylester an Polyvinylchlorid.
2) Ethylen-Kohlenmonoxid-Vinylacetat-Terpolymerisat (Kohlenmonoxidgehalt ca. 12 %; Vinylacetatgehalt ca. 28 %).
3) α-Methylstyrol-Acrylnitril-Copolymerisat (Acrylnitrilgehalt ca. 30 %).

Das Ergebnis zeigt, daß überraschenderweise die weicheren Folien trotz praktisch gleichbleibender Glasumwandlungstemperatur die geringere Nachschrumpfung besitzen.

Die Zusätze der vorgenannten polaren Polyolefine bewirken im Verarbeitungsbereich eine Erniedrigung der Viskosität und eine geringere Viskositätsänderung in Abhängigkeit von der Verarbeitungszeit.

200 g der Vergleichsmischung und der erfindungsgemäßen Mischung 1b wurden jeweils auf einem Meßwalzwerk mit einem Walzenspalt von 0,7 mm bei 190°C unter gleichen Bedingungen gewalzt und die Spaltkraft sowie ihre zeitliche Veränderung gemessen.

Die erfindungsgemäße Mischung ergab eine Spaltkraft von 4,7 N und einen geschlossenen drehenden Wulst im Walzenspalt bis zu einer Walzzeit von 43 min.. Dann erfolgte ein Viskositätssprung und eine Zungenbildung im Walzenspalt mit dem Ergebnis eines rauhen Walzenfelles.

Bei der Vergleichsmischung betrug die Spaltkraft 6,5 N bei einem ungleichmäßigen Wulstlauf mit Zungenbildung und ergab ein rauhes Walzenfell während der gesamten Walzzeit.

Aus den vorgenannten Mischungen wurden unter geeigneten Bedingen 0,4 mm dicke Folien kalandriert. Während die erfindungsgemäße Mischung sich problemlos zu einer glatten Folie kalandrieren ließ, war die Vergleichsmischung rauh. An den Folien wurden folgende Eigenschaften gemessen (nach entsprechenden DIN-Normen):

| Rezeptur | | erfindungsgem. Mischung (1b) | Vergleichsmischung |
|---|---|---|---|
| Zugfestigkeit | längs | 29 | 34,5 |
| (N/mm$^2$) | quer | 25 | 28,5 |
| Bruchdehnung | längs | 195 | 126 |
| (%) | quer | 210 | 165 |
| Härte Shore D | | 64 | 70 |
| Vicat-Temp. (A) | °C | 102 | 113 |

Die Tiefziehfähigkeit dieser Folien wurde an einer positiven Keilform mit der Grundfläche von 150 mm x 200 mm und einer Höhe von 120 mm getestet. Folgende Eigenschaften wurden ermittelt:

| Rezeptur | erfindungsgem. Mischung (1b) | Vergleichsmischung |
|---|---|---|
| Temperaturintervall (°C) bei einwandfreier Verformung | 130 - 190 | 150 - 190 |
| Dickenverhältnis* Basis zur Spitze | 1 : 0,96 | 1 : 0,79 |
| Schrumpfung (%) 15 120° Verformungstemp. 165°C | 4,0 | 9,7 |

*) Das Dickenverhältnis ist "Wanddicke der schrägen Kante-Spitze Wanddicke der schrägen Kante Basis" bei 165°C Tiefziehtemperatur.

Zur Schrumpfungsmessung wurde aus der Seitenfläche ein Probekörper 10 x 10 cm ausgeschnitten und die Längsänderung in Längsrichtung (Hauptverformungsrichtung) gemessen. Die Ergebnisse zeigen, daß durch den Zusatz des Ethylen-Kohlenmonoxid-Vinylacetat-Terpolymerisates die Viskosität vermindert und die Verarbeitungszeit erhöht wurde. Die Rückschrumpfung der längsverformten Probe wird durch den Zusatz oberhalb und unterhalb der Glasumwandlungstemperatur vermindert.

Auch bei dem Tiefziehversuch ist gegenüber der Vergleichsmischung der Temperaturbereich der einwandfreien Verformung größer, die Dickenverteilung günstiger und die Rückschrumpfung geringer. Dies weist auf das günstigere viskose Fließverhalten bei der Herstellung und Verarbeitung der Folien hin.

**Beispiel 2:**

Es wurde eine Mischung aus

54 Gew.-Teilen   acrylatgepfropftem Polyvinylchlorid, (Acrylesteranteil ca. 40 Gew.-%, bezogen auf 100 Gew.-% acrylgepfropftes PVC),

28 Gew.-Teilen   α-Methylstyrol-Acrylnitril-Copolymerisat (Acrylnitrilgehalt ca. 30 %) und

18 Gew.-Teilen   eines Ethylen-Vinylacetat-Copolymerisats (Vinylacetatgehalt 60 Gew.-%) hergestellt.

Aus der Mischung wurde unter geeigneten Bedingungen eine 0,4 mm dicke Folie kalandriert. An dieser Folie wurden folgende Werte nach den entsprechenden DIN-Prüfnormen gemessen:

| Zugfestigkeit | längs | 22,7 |
| (N/mm²) | quer | 21,0 |
| Bruchdehnung | längs | 217 |
| (%) | quer | 216 |
| Härte Shore D | | 56 |
| Vicattemperatur (A) (°C) | | 93. |

Die entsprechend Beispiel 1 durchgeführten Tiefziehprüfungen und Messungen der Schrumpfung am Formteil ergaben folgende Ergebnisse:

| Temperaturintervall (°C) | |
| bei einwandfreier Verformung | 135 - 190 |
| Dickenverhältnis Basis zur Spitze | 1 : 0,88 |
| Schrumpfung (%) 15' 120°C | |
| Verformungstemp. 165°C | 6,7. |

Diese Ergebnisse zeigen einen vergleichbaren Effekt durch den Zusatz des Ethylen-Vinylacetat-Copolymerisats.

## Beispiel 3:

Die Polymerisate des Beispiels 1 wurden in folgenden Verhältnissen gemischt:

| 70 Gew.-Teile | acrylatgepfropftes Polyvinylchlorid (Acrylesteranteil ca. 40 Gew.-%, bezogen auf 100 Gew.-% acrylgepfropftes PVC), |
| 15 Gew.-Teile | α-Methylstyrol-Acrylnitril-Copolymerisat (Acrylnitrilgehalt ca. 30 %), |
| 15 Gew.-Teile | Ethylen-Kohlenmonoxyd-Vinylacetat-Terpolymerisat (Kohlenmonoxidgehalt ca. 12 %, Vinylacetatgehalt ca. 28 %). |

Aus dieser Mischung wurde unter geeigneten Bedingungen ein 0,4 mm dicke Folie kalandriert. Diese ergab folgende Prüfwerte nach DIN-Prüfnormen:

| Zugfestigkeit | längs | 23 |
| (N/mm²) | quer | 21 |
| Bruchdehnung | längs | 220 |
| (%) | quer | 270 |
| Härte Shore D | | 48 |
| Vicattemperatur (A) (°C) | | 71. |

Die entsprechend Beispiel 1 durchgeführten Tiefziehprüfungen und Messungen der Formteilschrumpfung ergaben:

| Temperaturintervall (°C) | |
| bei einwandfreier Verformung | 130 - 190 |
| Dickenverhältnis Basis zur Spitze | 1 : 0,81 |
| Schrumpfung (%) 15' 120°C | |
| Verformungstemp. 165°C | 6,8. |

Diese Ergebnisse zeigen, daß auch die sehr weiche Folie ein günstigeres Verformungsverhalten und eine geringere Rückschrumpfung als die Vergleichsmischung besitzt.

## Beispiel 4:

Anstelle des α Methylstyrol-Acrylnitril-Copolymerisates wurde hier ein Styrol-Acrylnitril-Copolymerisat mit einem Acrylnitrilgehalt von ca. 30 % zusammen mit den weiteren Polymerisaten (1) und (2) des Beispiels 1 in folgender Mischung verwendet:

| 55 Gew.-Teile | acrylatgepfropftes Polyvinylchlorid Acrylesteranteil ca. 40 Gew.-%, bezogen auf 100 Gew.-% acrylgepfropftes PVC), |
| 30 Gew.-Teile | Styrol-Acrylnitril-Copolymerisat, |
| 15 Gew.-Teile | Ethylen-Kohlenmonoxyd-Vinylacetat-Terpolymerisat (Kohlenmonoxidgehalt ca. 12 %, |

Vinylacetatgehalt ca. 28 %).

Die kalandrierten Folien aus dieser Mischung ergaben nach DIN-Prüfnorm folgende Werte:

| Zugfestigkeit | längs | 25,6 |
| $(N/mm^2)$ | quer | 25,9 |
| Bruchdehnung | längs | 275 |
| (%) | quer | 300 |
| Härte Shore D | | 56 |
| Vicat-Temperatur (A) (°C) | | 95. |

Die entsprechend Beispiel 1 durchgeführten Tiefzieh- und Warmschrumpfungsprüfungen ergaben folgende Ergebnisse:

| Temperaturintervall (°C) | |
| bei einwandfreier Verformung | 140 - 190 |
| Dickenverhältnis Basis zur Spitze | 1 : 0,86 |
| Schrumpfung (%) 15' 120°C | |
| Verformungstemp. 165°C | 5,3. |

Hieraus ergibt sich ebenfalls die Eignung des Mischpolymerisats aus Styrol-Acrylnitril.

**Beispiel 5:**

Anstelle des Styrol-Copolymerisates wird ein Mischpolymerisat auf der Basis eines Methacrylsäureesters in folgender Mischung verwendet:

| 55 Gew.-Teile | acrylgepfropftes Polyvinylchlorid Acrylesteranteil ca. 40 Gew.-%, bezogen auf 100 Gew.-% acrylgepfropftes PVC), |
| 30 Gew.-Teile | Methycrylsäureester-Copolymerisar, |
| 15 Gew.-Teile | Ethylen-Kohlenmonoxyd-Vinylacetat-Terpolymerisat (Kohlenmonoxidgehalt ca. 12 %, Vinylacetatgehalt ca. 28 %) |

und daraus eine 0,4 mm dicke Folie kalandriert.

An dieser Folie wurden folgende Prüfwerte nach DIN-Norm gemessen:

| Zugfestigkeit | längs | 22,7 |
| $(N/mm^2)$ | quer | 21,3 |
| Bruchdehnung | längs | 217 |
| (%) | quer | 216 |
| Härte Shore D | | 48 |
| Vicattemperatur (A) (°C) | | 93. |

Die entsprechend Beispiel 1 durchgeführten Tiefzieh- und Warmschrumpfungsprüfungen ergaben folgende Ergebnisse.

| Temperaturintervall (°C) | |
| bei einwandfreier Verformung | 130 - 190 |
| Dickenverhälntis Basis zur Spitze | 1 : 0,85 |
| Schrumpfung (%) 15' 120°C | |
| Verformungstemp. 165°C | 8,3. |

Die Verwendung des Mischpolymerisates auf der Basis von Methacrylsäureester ergibt, verglichen mit dem α Methylstyrol-Acrylnitril-Mischpolymerisat, wesentlich weichere Folie, die aber im Verformungsverhalten noch günstiger sind als die Vergleichsmischung.

**Patentansprüche**

1. Formmassen zur Herstellung von alterungsbeständigen Folien mit verbesserten Verarbeitungseigenschaften, bestehend aus Gemischen auf der Basis von
    1. mit Acrylat gepfropftem Polyvinylchlorid mit einem Anteil des Acrylats an dem Pfropfpolymerisat oder

7

Pfropfmischpolymerisat von

30 - 60 Gew.-%, vorzugsweise
35 - 50 Gew.-%,

(bezogen auf 100 Gew.-% acrylatgepfropftes PVC oder acrylatgepfropftes Vinylchloridmischpolymerisat) und
2. einem anderen Polymeren oder Polymergemisch sowie ggf. mit einem zusätzlichen Gehalt an
3. Füllstoffen, Verarbeitungshilfsmitteln oder anderen an sich bekannten Zusatzmitteln,
dadurch gekennzeichnet, daß die Formmasse aus

90 - 45 Gew.-%, vorzugsweise
85 - 50 Gew.-%,

des mit Acrylat gepfropften Polyvinylchlorids 1. und

10 - 55 Gew.-%, vorzugsweise
15 - 50 Gew.-%,

des anderen Polymeren oder Polymergemisches 2. besteht, das
eine Glasumwandlungstemperatur von größer als 70°C, vorzugsweise größer als 80°C, besitzt und mit dem Polyvinylchlorid-Pfropfpolymerisat verträglich ist, und ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate ist und dass das Polymergemisch 2. zusätzlich mindestens ein Copolymerisat mit polaren Gruppen oder Monomeren mit einer Glasumwandlungstemperatur von kleiner als 60°C, vorzugsweise kleiner als 50°C, enthält.
2. Formmassen nach Anspruch 1, dadurch gekennzeichnet, daß das Polymergemisch 2. als zusätzliches Copolymerisat mit polaren Gruppen oder Monomeren mindestens ein Olefin-Copolymerisat mit polaren Gruppen und Monomeren, vorzugsweise ein Ethylen-Copolymerisat mit polaren Gruppen oder Monomeren enthält.
3. Formmassen nach Ansprüchen 1 und 2, dadurch gekennzeichnet, daß das Polymergemisch 2. aus

3 - 30 Gew.-Teilen, vorzugsweise
5 - 25. Gew.-Teilen,

eines oder mehrerer Olefincopolymerisate mit polaren Monomeren oder polaren Gruppen, vorzugsweise aus einem oder mehreren Ethylencopolymerisaten mit polaren Monomeren oder polaren Gruppen, und

3 - 52 Gew.-Teilen, vorzugsweise
5 - 45 Gew.-Teilen,

eines Styrol-Acrylnitril-Copolymerisates (SAN), eines Methylstyrol-Acrylnitril-Copolymerisates, eines Styrol-Maleinsäureanhydrid-Copolymerisates, eines Polymethylmethacrylates (PMMA) und/oder eines Copolymerisates aus einem oder mehreren Acrylestern mit Acrylnitril oder einer Mischung von zwei oder mehreren dieser Copolymerisate besteht.
4. Folie, insbesondere flexible Tiefziehfolie mit verbessertem Alterungsverhalten, bestehend aus einer Legierung oder Mischung aur der Basis von
1. mit Acrylat gepfropftem Polyvinylchlorid mit einem Anteil des Acrylats an dem Pfropfpolymerisat oder Pfropfmischpolymerisat von

30 - 60 Gew.-%, vorzugsweise
35 - 50 Gew.-%,

(bezogen auf 100 Gew.-% acrylatgepfropftes PVC oder Vinylchloridmischpolymerisat) und
2. einem anderen Polymeren oder Polymergemisch sowie ggf. mit einem zusätzlichen Gehalt an
3. Füllstoffen, Verarbeitungshilfsmitteln oder anderen an sich bekannten Zusatzmitteln, dadurch gekennzeichnet, daß die Formmasse aus

90 - 45 Gew.-%, vorzugsweise
85 - 50 Gew.-%,

des mit Acrylat gepfropften Polyvinylchlorids 1.

8

10 - 55 Gew.-%, vorzugsweise
15 - 50 Gew.-%,

eines anderen Polymeren oder Polymergemisches 2. besteht, das eine Glasumwandlungstemperatur von größer als 70°C, vorzugsweise größer als 80°C, besitzt und mit dem Polyvinylchlorid - Pfropfpolymerisat verträglich ist und ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate ist, und das Polymergemisch 2. zusätzlich mindestens ein Copolymerisat mit polaren Gruppen oder Monomeren mit einer Glasumwandlungstemperatur von kleiner als 60°C, vorzugsweise kleiner als 50°C, enthält.

5. Folie nach Anspruch 4, dadurch gekennzcichnet, daß das Polymergemisch 2. als zusätzliches Copolymerisat mit polaren Gruppen oder Monomeren mindestens ein Olefin-Copolymerisat mit polaren Gruppen und Monomeren, vorzugsweise ein Ethylen-Copolymerisat mit polaren Gruppen oder Monomeren enthält.

6. Folie nach Ansprüchen 4 und 5, dadurch gekennzeichnet, daß die

10 - 50 Gew.- %, vorzugsweise
15 - 45 Gew.-%,

des Polymergemisches 2. aus

3 - 30 Gew.-Teilen, vorzugsweise
5 - 25 Gew.-Teilen,

(bezogen auf die Kunststoffmischung) eines oder mehrerer Olefincopolymerisate mit polaren Monomeren oder polaren Gruppen, vorzugsweise aus einem oder mehreren Ethylencopolymerisaten mit polaren Monomeren oder polaren Gruppen, und

3 - 52 Gew.-Teilen, vorzugsweise
5 - 45 Gew.-Teilen,

eines Styrol-Acrylnitril-Copolymerisates (SAN), eines Methylstyrol-Acrylnitril-Copolymerisates, eines Styrol-Maleinsäureanhydrid-Copolymerisates, eines Polymethylmethacrylates (PMMA) und/oder eines Copolymerisates aus einem oder mehreren Acrylestern mit Acrylnitril oder einer Mischung von zwei oder mehreren dieser Copolymerisate besteht.

## Claims

1. Moulding materials for the production of ageing-resistant films with improved workability, consisting of mixtures based on
1. polyvinyl chloride grafted with acrylate with a proportion of the acrylate in the graft polymer or mixed graft polymer of

30 - 60 % weight, preferably
35 - 50 % weight,

(relative to 100 % weight of acrylate-grafted PVC or acrylate-grafted mixed vinyl chloride polymer) and
2. another polymer or polymer mixture and also optionally with an additional content of
3. fillers, auxiliary processing agents or other known additives,
characterised in that the moulding material consists of

90 - 45 % weight, preferably
85 - 50 % weight,

of the polyvinyl chloride 1. grafted with acrylate and

10 - 55 % weight, preferably
15 - 50 % weight,

of the other polymer or polymer mixture 2., which has a glass transition temperature greater than 70°C, preferably greater than 80°C, and is compatible with the polyvinyl chloride graft polymer, and is a styrene/acrylonitrile copolymer (SAN), a methylstyrene-acrylonitrile copolymer, a styrene/maleic anhydride copolymer, a polymethylmethacrylate (PMMA) and/or a copolymer made from one or more acrylates with acrylonitrile or a mixture of two or more of said polymers or copolymers, and that the polymer mixture 2. contains in addition at least one copolymer with polar groups or monomers with a glass transition temperature of less than 60°C, preferably less than 50°C.

2. Moulding materials according to Claim 1, characterised in that the polymer mixture 2. contains at least one olefin copolymer with polar groups and monomers, preferably an ethylene copolymer with polar groups or monomers, as an additional copolymer with polar groups or monomers.

3. Moulding materials according to Claims 1 and 2, characterised in that the polymer mixture 2. consists of

3 - 30 parts by weight, preferably
5 - 25 parts by weight,

of one or more olefin copolymers with polar monomers or polar groups, preferably made from one or more ethylene copolymers with polar monomers or polar groups, and

3 - 52 parts by weight, preferably
5 - 45 parts by weight,

of a styrene/acrylonitrile copolymer (SAN), a methylstyrene/acrylonitrile copolymer, a styrene/maleic anhydride copolymer, a polymethylmethacrylate (PMMA) and/or a copolymer made of one or more acrylates with acrylonitrile or a mixture of two or more of said copolymers.

4. A film, particularly a flexible deep-drawn film with improved ageing behaviour, consisting of an alloy or mixture based on

1. polyvinyl chloride grafted with acrylate with a proportion of the acrylate in the graft polymer or mixed graft polymer of

30 - 60 % weight, preferably
35 - 50 % weight,

(relative to 100 % weight of acrylate-grafted PVC or mixed vinyl chloride polymer) and

2. another polymer or polymer mixture and also optionally with an additional content of

3. fillers, auxiliary processing agents or other known additives, characterised in that the moulding material consists of

90 - 45 % weight, preferably
85 - 50 % weight,

of the polyvinyl chloride 1. grafted with acrylate,

10 - 55 % weight, preferably
15 - 50 % weight,

of another polymer or polymer mixture 2., which has a glass transition temperature greater than 70°C, preferably greater than 80°C, and is compatible with the polyvinyl chloride graft polymer, and is a styrene/acrylonitrile copolymer (SAN), a methylstyrene-acrylonitrile copolymer, a styrene/maleic anhydride copolymer, a polymethylmethacrylate (PMMA) and/or a copolymer made from one or more acrylates with acrylonitrile or a mixture of two or more of said polymers or copolymers, and the polymer mixture 2. contains in addition at least one copolymer with polar groups or monomers with a glass transition temperature of less than 60°C, preferably less than 50°C.

5. A film according to Claim 4, characterised in that the polymer mixture 2. contains at least one olefin copolymer with polar groups and monomers, preferably an ethylene copolymer with polar groups or monomers, as an additional copolymer with polar groups or monomers.

6. A film according to claims 4 and 5, characterised in that the

10 - 50 % weight, preferably
15 - 45 % weight,

of the polymer mixture 2. consists of

3 - 30 parts by weight, preferably
5 - 25 parts by weight,

(relative to the plastic mixture) of one or more olefin copolymers with polar monomers or polar groups, preferably made from one or more ethylene copolymers with polar monomers or polar groups, and

3 - 52 parts by weight, preferably
5 - 45 parts by weight,

of a styrene/acrylonitrile copolymer (SAN), a methylstyrene/acrylonitrile copolymer, a styrene/maleic anhydride copolymer, a polymethylmethacrylate (PMMA) and/or a copolymer made of one or more acrylates with acrylonitrile or a mixture of two or more of said copolymers.

## Revendications

1. Masses de moulage pour la production de feuilles résistant au vieillissement, présentant des propriétés d'ouvrabilité améliorées, formées d'un mélange à base de:
  1. du polychlorure de vinyle greffé par un acrylate, présentant une teneur en acrylate par rapport au polymère greffé ou au copolymère greffé de:

30 à 60 % en poids, de préférence
35 à 50 % en poids

(exprimé par rapport à 100 % en poids de PVC greffé par l'acrylate ou de copolymère de chlorure de vinyle greffé par l'acrylate), et
  2. un autre polymère ou mélange de polymères de même qu'éventuellement une teneur supplémentaire en
  3. matières de charge, adjuvants d'ouvrabilité ou d'autres agents additifs connus en soi,
  caractérisées en ce que les masses de moulage sont constituées par:

90 à 45 % en poids, de préférence
85 à 50 % en poids,

du polychlorure de vinyle greffé par l'acrylate 1. et

10 à 55 % en poids, de préférence
15 à 50 % en poids

de l'autre polymère ou mélange de polymères 2. qui présente une température de transition vitreuse supérieure à 70°C, de préférence supérieure à 80°C, et qui est compatible avec le polymère greffé de polychlorure de vinyle et qui est un copolymère styrène-acrylonitrile (SAN), un copolymère méthylstyrène-acrylonitrile, un copolymère styrène-anhydride maléique, un polyméthacrylate de méthyle (PMMA) et/ou un copolymère d'un ou plusieurs esters acryliques avec l'acrylonitrile ou un mélange de deux ou plus de deux de ces polymères, le mélange de polymères 2. contenant complémentairement au moins un copolymère avec des groupes ou des monomères polaires présentant une température de transition vitreuse inférieure à 60°C, de préférence inférieure à 50°C.

2. Masses de moulage selon la revendication 1, caractérisées en ce que le mélange de polymères 2. contient comme copolymère complémentaire avec des groupes ou des monomères polaires, au moins un copolymère oléfinique avec des groupes ou des monomères polaires, de préférence un copolymère éthylénique avec des groupes ou des monomères polaires.

3. Masses de moulage selon les revendications 1 et 2, caractérisées en ce que le mélange de polymères 2. est constitué de:

3 à 30 parties en poids, de préférence
5 à 25 parties en poids

d'un ou plusieurs copolymères oléfiniques avec des monomères polaires ou des groupes polaires, de préférence un ou plusieurs copolymères éthyléniques avec des monomères ou des groupes polaires, et

3 à 52 parties en poids, de préférence
5 à 45 parties en poids

d'un copolymère styrène-acrylonitrile (SAN), d'un copolymère méthylstyrène-acrylonitrile, d'un copolymère styrène-anhydride maléique, d'un polyméthacrylate de méthyle (PMMA) et/ou d'un copolymère d'un ou plusieurs esters acryliques avec l'acrylonitrile ou un mélange de deux ou plus de deux de ces copolymères.

4. Feuille, en particulier feuille emboutissable, présentant des propriétés de vieillissement améliorées constituées d'un alliage ou d'un mélange à base de:
  1. polychlorure de vinyle greffé par un acrylate, présentant une teneur en acrylate par rapport au polymère greffé ou au copolymère greffé de:

30 à 60 % en poids, de préférence
35 à 50 % en poids

(exprimé par rapport à 100 % en poids de PVC ou de copolymère de chlorure de vinyle greffé par l'acrylate), et

2. un autre polymère ou mélange de polymères de même qu'éventuellement une teneur supplémentaire en

3. matières de charge ou adjuvants d'ouvrabilité ou d'autres agents additifs connus en soi, caractérisées en ce que les masses de moulage sont constituées par:

90 à 45 % en poids, de préférence
85 à 50 % en poids,

du polychlorure de vinyle greffé par l'acrylate 1. et

10 à 55 % en poids, de préférence
15 à 50 % en poids

de l'autre polymère ou mélange de polymères 2. qui présente une température de transition vitreuse supérieure à 70°C, de préférence supérieure à 80°C, et qui est compatible avec le polymère greffé de polychlorure de vinyle et qui est un copolymère styrène-acrylonitrile (SAN), un copolymère méthylstyrène-acrylonitrile, un copolymère styrène-anhydride maléique, un polyméthacrylate de méthyle (PMMA) et/ou un copolymère d'un ou plusieurs esters acryliques avec l'acrylonitrile ou un mélange de deux ou plus de deux de ces polymères, le mélange de polymères 2. contenant complémentairement au moins un copolymère avec des groupes ou des monomères polaires présentant une température de transition vitreuse inférieure à 60°C, de préférence inférieure à 50°C.

5. Feuille selon la revendication 4, caractérisée en ce que le mélange de polymères 2. contient comme copolymère complémentaire avec des groupes ou des monomères polaires, au moins un copolymère oléfinique avec des groupes ou des monomères polaires, de préférence un copolymère éthylénique avec des groupes ou des monomères polaires.

6. Feuille selon les revendications 4 et 5, caractérisée en ce que les:

10 à 50 % en poids, de préférence
15 à 45 % en poids

du mélange de polymères 2. sont constitués de

3 à 30 parties en poids, de préférence
5 à 25 parties en poids,

(exprimé par rapport au mélange de polymères) d'un ou plusieurs copolymères oléfiniques avec des monomères polaires ou des groupes polaires, de préférence un ou plusieurs copolymères éthyléniques avec des monomères ou des groupes polaires, et

3 à 52 parties en poids, de préférence
5 à 45 parties en poids

d'un copolymère styrène-acrylonitrile (SAN), d'un copolymère méthylstyrène-acrylonitrile, d'un copolymère styrène-anhydride maléique, d'un polyméthacrylate de méthyle (PMMA) et/ou d'un copolymère d'un ou plusieurs esters acryliques avec l'acrylonitrile ou un mélange de deux ou plus de deux de ces copolymères.